## Europäisches Patentamt
## European Patent Office
## Office européen des brevets

(19)

(11) Veröffentlichungsnummer: **0 098 792**
**A1**

# (12) EUROPÄISCHE PATENTANMELDUNG

(21) Anmeldenummer: **83710045.2**

(22) Anmeldetag: **30.06.83**

(51) Int. Cl.³: **B 60 P 1/64**

(30) Priorität: **01.07.82 DE 3224568**
 **29.09.82 DE 3235972**

(43) Veröffentlichungstag der Anmeldung: **18.01.84**
**Patentblatt 84/3**

(84) Benannte Vertragsstaaten: **AT BE CH FR GB IT LI LU NL SE**

(71) Anmelder: **Paul, Josef, An der alten Schmiede 1, D-8358 Vilshofen (DE)**

(72) Erfinder: **Paul, Josef, An der alten Schmiede 1, D-8358 Vilshofen (DE)**

(74) Vertreter: **Patentanwälte Czowalla . Matschkur + Partner, Königstrasse 1, D-8500 Nürnberg 106 (DE)**

(54) **Nutzfahrzeug mit Wechselaufbau.**

(57) Nutzfahrzeug mit einem zur Aufnahme eines wechselbaren Aufbaus (15), (Behälter) dienenden Hubrahmen (6), der gegenüber dem Fahrzeugrahmen (1) durch eine Hubvorrichtung (5) anhebbar und kippbar angeordnet ist, wobei der durch vordere (3) und hintere (4) Hubrahmenstreben parallelogrammartig geführte Hubrahmen (6), wobei die hinteren Hubrahmenstreben (4) zum Kippen starr mit dem Hubrahmen (6) verbindbar sind, in seiner Transportstellung auf dem Fahrzeugrahmen (1) aufliegt, und dass der Hubrahmen (6) einen gegenüber einem unteren Trägerrahmen (7) längsverschiebbaren Schieberahmen (8) aufweist.

"Nutzfahrzeug mit Wechselaufbau"

Die Erfindung bezieht sich auf ein Nutzfahrzeug mit einem zur Aufnahme eines wechselbaren Aufbaus (Behälter) dienenden Hubrahmen, der gegenüber dem Fahrzeugrahmen durch eine Hubvorrichtung anhebbar und kippbar angeordnet ist.

Derartige Fahrzeuge dienen beispielsweise dazu, um einen Wechselaufbau selbsttätig, d. h. ohne Verwendung eines Kranes oder dergleichen am Boden abzusetzen und wieder aufzunehmen, dabei kann der Wechselaufbau wahlweise ohne oder mit arretierbar verlängerbaren Stützstreben ausgerüstet sein. Die zusätzliche Kippbarkeit des Aufbaus dient dabei dazu, um bei einem Schüttgutaufbau diesen zum Zwecke der Entleerung ankippen zu können.

Der Erfindung liegt die Aufgabe zugrunde, ein einfach und gleichwohl betriebssicher aufgebautes Nutzfahrzeug der eingangs genannten Art so auszugestalten, daß ein besonders einfaches und betriebssicheres Aufnehmen und Absetzen des Aufbaus sowohl unmittelbar vom oder auf den Boden sowie einer Rampe oder einem anderen Fahrzeug möglich ist.

Zur Lösung dieser Aufgabe ist erfindungsgemäß vorgesehen, daß der durch vordere und hintere Hubrahmenstreben parallelogrammartig geführte Hubrahmen, wobei die hinteren Hubrahmenstreben zum Kippen starr mit dem Hubrahmen verbindbar sind, in seiner Transportstellung auf dem Fahrzeugrahmen aufliegt und daß der Hubrahmen einen gegenüber

- 2 -

einem unteren Trägerrahmen längsverschiebbaren Schieberahmen aufweist.

Durch die erfindungsgemäße Ausbildung ist neben der nach wie
vor gegebenen Möglichkeit der Übernahme und des Absetzens
von Aufbauten mit seitlichen Stützstreben, welche den Aufbau in einem Abstand zum Boden halten, zusätzlich ein direktes Absetzen bzw. Aufnehmen des Aufbaus auf den bzw.
vom Boden, sowie auch ein Überschieben auf Rampen oder andere Fahrzeuge beliebiger Höhe möglich.

Mit besonderem Vorteil soll zu diesem Zweck der Schieberahmen als Gleitrahmen ausgebildet sein, wobei zum Herunterschieben bzw. wieder Heraufziehen auf diese Gleitrampe
bevorzugt ein auf dem Schieberahmen gleitend verschiebbarer
Schlitten vorgesehen sein kann.

Bei der Erfindung lassen sich durch die plateauartige Ausführung des Schieberahmens unterschiedliche Behälterformen
in Bezug auf Abmessungen als auch im Bezug auf Behälterunterbau verwenden (Behälter mit Kufen, mit Rollen oder Rädern, Behälter mit flacher Unterseite, Container, Transportbehälter in gabelstaplerfähiger Plateauform). Um ein
leichtes gleichmäßiges Abgleiten der Behälter zu gewährleisten, hat sich eine Variante als besonders vorteilhaft erwiesen und zwar hat der Aufbau Gleitkufen, welche mit endseitigen, nur bei Schrägstellung des Aufbaus am Boden aufliegenden Gleitrollen versehen ist. Durch diese Maßnahme ist
nämlich der Aufbau in seiner abgesetzten Stellung sowohl am
Boden, als auch in seiner Transportstellung auf dem Fahrzeug gegen Verschiebungen weitestgehend gesichert, da ja
die Gleitkufen unmittelbar auf dem Schieberahmen aufsitzen.
Beim Absetzen des Aufbaus mit Hilfe des schräggestellten
und in seiner Verlängerungsstellung ausgeschobenen Hubrahmens setzt der Aufbau zunächst mit seinen hinteren Gleitrollen am Boden auf, so daß er in die endgültige Absetzstellung weiterrollen kann, in der bei der Waagrechtstellung die Gleitrollen zwangsläufig vom Boden abheben, so
daß dann unmittelbar auch eine stabile Halterung gegeben
ist.

Umfangreiche, der vorliegenden Erfindung zugrundeliegende
Versuche haben dabei ergeben, daß es besonders günstig ist,
den Schieberahmen beim Absetzen des Aufbaus auf den Boden
mit seinem rückwärtigen Ende nicht unmittelbar am Boden anstoßen zu lassen, sondern die Schrägstellung so zu wählen,
daß das rückwärtige Ende des ausgefahrenen Schieberahmens
durch Stützstreben im Abstand vom Boden gehalten ist. Eine
Schieberolle am Ende des Schieberahmens ermöglicht dann
ein Aufnehmen und Absenken des vorderen Endes des Aufbaus
mittels einer Seilwinde oder einer anderen Zugvorrichtung,
z. B. einen Kettenantrieb, oder aber auch einen Antrieb
mittels einer Zahnstange, wobei der Hydraulikmotor im Schlitten oder wahlweise im Schieberahmen montiert ist.

Eine solche Seilzugvorrichtung läßt sich in weiterer Ausgestaltung der Erfindung besonders vorteilhaft durch den mit
einer Antriebsvorrichtung versehenen Schlitten bilden, der
eine Umlenkrolle für das am hinteren Ende des Schieberahmens
befestigte Zugseil trägt. Dadurch ist es möglich, durch die
Bewegung des Schlittens eine doppelt so große Bewegung des
am Seil eingehängten Aufbaus zu erzielen, so daß es mit der
Schlittenbewegung nicht nur möglich ist den Aufbau über die
gesamte Länge des Schieberahmens zu ziehen, sondern auch die
zusätzliche Anhebbewegung zum Hochziehen des Aufbaus auf das
geneigte, in Abstand vom Boden befindliche Ende des Schieberahmens durchzuführen. Das Seil, welches für den Aufzug
des Behälters vorgesehen ist, kann wahlweise aus einem oder
zwei Seilen bestehen, welche links und rechts in Fahrtrichtung angeordnet sind, so daß der Behälter zwangsläufig in gerader Richtung bei gleichzeitigem Synchronlauf der Seile aufgezogen wird. Zur Gewährleistung des Synchronlaufs kann man im einfachsten Fall eine gemeinsame Antriebsvorrichtung für beide Seile vorsehen. Das oder die Seile können sowohl über die vorstehend bereits beschriebene Seilanordnung aufgezogen werden, als auch mittels einer Seilwinde, welche auf dem Schlitten montiert ist und zwei Seile über Umlenkrollen einzieht, die seitlich an einem Träger verschiebbar angeordnet sind. Dadurch ergibt sich die Möglichkeit, die Seile so am Behälter angreifen zu lassen, daß ein Schrägzug vermieden wird, bzw. man kann Behälter mit unterschiedlichen Breiten aufnehmen. Darüber hinaus ist es durch diese Konstruktion auch möglich, bei entsprechendem Fahrzeugaufbau mehrere Behälter hintereinander aufzuziehen, indem die Seile seitlich an den bereits heraufgezogenen Behältern vorbeigeführt werden.

Der Schlitten selbst ist bevorzugt an Laufschienen mittig an Schieberahmen geführt und wird wahlweise mittels Kettenantrieb, Seilantrieb oder über Zahnräder an Zahnstangen bewegt, wobei der Antriebsmotor sowohl am Schlitten, als auch am Schieberahmen angeordnet sein kann.

Insbesondere beim Überschieben des Aufbaus von einem erfindungsgemäßen Nutzfahrzeug auf eine Rampe oder ein anderes Fahrzeug, wobei die Anpassung der meist ja unterschiedlichen Höhen zunächst durch entsprechende Betätigung des waagrecht gestellten Hubrahmens des Fahrzeugs erfolgt, muß der Aufbau über das Ende des Schieberahmens bewegt werden. Zu diesem Zweck ist vorgesehen, daß der Schlitten, der wenigstens einen an der Vorderwand des Aufbaues angreifenden Schiebehaken aufweist, zusätzlich einen weiteren Schiebehaken hat, welcher das Überschieben des Behälters bis in seine Endstellung ermöglicht. Dieser weitere Schiebehaken kann wahlweise so ausgebildet sein, daß der Schlittenausleger als Ganzes in senkrechter Richtung beweglich angeordnet ist und beim Rückziehen des Schlittens nach oben angehoben wird, bis die Vorderkante des Schlittenauslegers als weiterer Schiebehaken am Behälter angreifen kann, oder daß am Schlittenausleger ein versenkbarer Schiebehaken angeordnet ist, welcher nach dem Rückziehen des Schlittens nach oben ausgefahren wird. Das Herüberziehen des Aufbaus von einer Rampe oder einem anderen Fahrzeug von den erfindungsgemäßen Nutzfahrzeugen erfolgt dann wiederum mit Hilfe der bereits beschriebenen Seilwinde oder der Zugseilanordnung, bei welchem der Schlitten als Antriebseinheit genutzt wird.

Die Ausbildung der Einrichtung zum endgültigen Abschieben des Behälters kann mit besonderem Vorteil so ausgebildet sein, daß der Schlitten als Ganzes mittels eines Hydraulikzylinders nach oben bewegbar ist, wobei das Ende des Schlittenauslegers dann unmittelbar ohne einen gesonderten Haken dazu verwendet wird, den Behälter endgültig so weit notwendig zu überschieben. Um eine seitliche Einjustierung des Behälters zu ermöglichen, ist der Schlittenausleger zusätzlich seitlich bis zu einem gewissen Winkel hydraulisch schwenkbar. Auf diese Weise ergibt sich die Möglichkeit, daß der Behälter mit Hilfe des hydraulisch gesteuerten Schlittenauslegers auch in seitlicher Richtung in die gewünschte Endlage gebracht werden kann.

Um Höhendifferenzen zwischen dem Absetzfahrzeug und dem Überfahrplateau im gewissen Umfang automatisch ausgleichen zu können kann schließlich weiter vorgesehen sein, daß der am Ende eine Keilrampe bildende Schlittenausleger am vorderen Ende am Schlitten angelenkt und durch eine Federeinrichtung horizontal verschwenkbar abgestützt ist.

Schließlich liegt es auch noch im Rahmen der Erfindung, daß die Länge des Aufbaus der Aufbaubreite und die Breite des Aufbaus im wesentlichen einem ganzzahligen Bruchteil der Ladelänge von Eisenbahnwaggons bzw. Container-LKWs entspricht. Dadurch ist ein besonders vorteilhaft zu realisierendes integriertes Transportsystem möglich, bei dem auf einem erfindungsgemäßen Nutzfahrzeug vom und zum Endverbraucher zu transportierende Container rationell quer zur Fahrtrichtung auf Großtransportern wie Container-LKWs oder Güterwagen über längere Strecken im Sammeltransport befördert werden können.

Weitere Vorteile, Merkmale und Einzelheiten der Erfindung ergeben sich aus der nachfolgenden Beschreibung eines Ausführungsbeispiels, sowie an Hand der Zeichnung. Dabei zeigen:

Fig. 1 eine Seitenansicht des Ladeabschnitts eines erfindungsgemäßen Nutzfahrzeugs mit zur Verdeutlichung der Bauteile geringfügig gegenüber dem Fahrzeugrahmen angehobenem Hubrahmen,

Fig. 2 eine Seitenansicht des erfindungsgemäßen Fahrzeugs während des Überschiebens des als Container ausgebildeten Aufbaus auf ein anderes Fahrzeug,

Fig. 3 eine Seitenansicht des Fahrzeugs mit gekipptem Hubrahmen und ausgefahrenem Schieberahmen während des Aufnehmens des Aufbaus vom Boden,

Fig. 4 eine Teilansicht des hinteren Endes des Schieberahmens in der Stellung des Aufbaus unmittelbar vor seinem Aufnehmen vom Boden,

Fig. 5 eine schematische Draufsicht auf einen Aufbau mit einer abgewandelten, eine einwandfreie Seilaufspulung ermöglichende Seilwinde,

Fig. 6 eine der Fig. 3 entsprechende Seitenansicht der Anordnung nach Fig. 5,

Fig. 7 einen vergrößerten Schnitt durch die Seilwinde und

Fig. 8 Teilschnitte durch den Verbindungsabschnitt der und 9 Seiltrommel mit der Antriebswelle bei unterschiedlicher Ausbildung der Nutverzahnung.

Am Fahrzeugrahmen 1 ist ein Hilfsrahmen 2 befestigt, an welchem vordere und hintere Hubrahmenstreben 3 bzw. 4 sowie ein zwischen ihnen angeordneter Hubzylinder 5 angelenkt sind. Bei Betätigung des Hubzylinders 5 bilden die vorderen und hinteren Hubstreben 3 und 4 eine parallelogrammartige Führung zum parallel zum Fahrzeugrahmen 1 erfolgenden Anheben und Absenken eines Hubrahmens 6, der einen gegenüber einem unteren Trägerrahmen 7 längsverschiebbaren Schieberahmen 8 aufweist. Die Verbindung des Trägerrahmens 7 mit dem Fahrzeugrahmen 1 und die spezielle Ausbildung der Hubrahmenstreben, von denen die hinteren starr mit dem Trägerrahmen 7 verbindbar sind, so daß ihre Anlenkpunkte 9 am Hilfsrahmen 2 gleichzeitig die Kippachse zum Verkippen des Hubrahmens 6 bei gelöster Verbindung zu den vorderen Hubrahmenstreben 3 bilden, sind Gegenstand einer älteren Patentanmeldung, so daß sie an dieser Stelle nicht im Detail näher beschrieben zu werden brauchen. Entscheidend ist die Verbindung eines solchen Hubrahmens der in seiner Transportstellung unmittelbar auf dem Fahrzeugrahmen 1 aufliegt mit einem einen Schieberahmen 8 aufweisenden Hubrahmen, so daß über die Absetz- und Aufnahmemöglichkeiten des Fahrzeugs nach der genannten älteren Anmeldung hinaus weitere Anwendungsmöglichkeiten gegeben sind, nämlich insbesondere das unmittelbare Absetzen und Wiederaufnehmen vom Boden und das Überschieben auf Rampen oder andere Fahrzeuge.

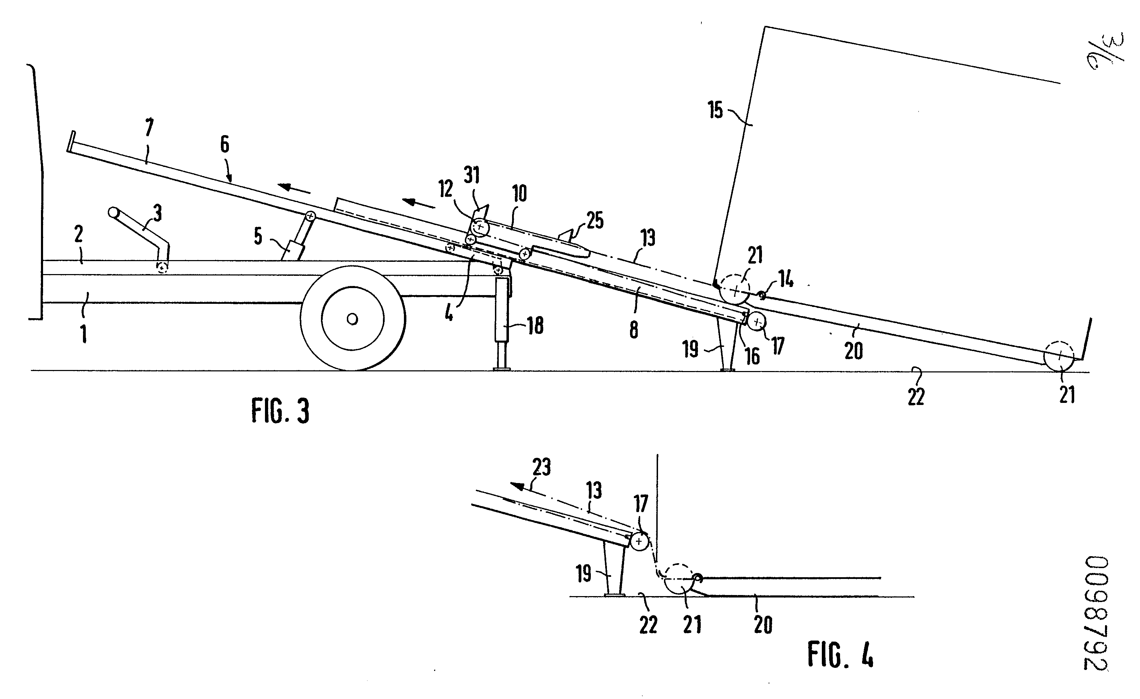

Zu diesem Zweck ist auf dem Schieberahmen 8 entweder ein mittig angeordneter oder zwei seitliche, vorzugsweise miteinander verbundene Schlitten 10 vorgesehen, die mittels Laufrollen 11 in nicht dargestellten Führungsschienen geführt sind, wobei ein Motor (Hydraulikmotor), welcher sich wahlweise am Schlitten oder am Schieberahmen befindet, über Kettenantrieb, Seilantrieb oder Zahnräder, welche an Zahnstangen, die mit dem Schieberahmen verbunden sind, angreift,für den Antrieb des Schlittens sorgt. Über eine Umlenkrolle 12 ist ein Zugseil 13 geführt, welches bei 14 in dem als Container ausgebildeten Aufbau 15 einhängbar ist. Das andere Ende des Zugseils ist bei 16 im Bereich des hinteren Endes des dort mit einer Schieberolle 17 versehenen Schieberahmens befestigt. Bei 18 ist eine hydraulische Abstützung am hinteren Ende des Fahrzeugrahmens vorgesehen, während 19 eine im allgemeinen starre, in der Transportstellung schräg nach hinten stehende Stützstrebe für den Schieberahmen 8 bezeichnet. Der Behälter, welcher mittels Schieberahmen bewegt wird, kann unterschiedliche Formen aufweisen (z. B. ebener Plateauboden, Gleitkufen, Räder usw.). Die Gleitrollen sind dabei so angeordnet, daß bei am Boden 22 aufliegenden Gleitkufen die Gleitrollen etwas in Abstand vom Boden liegen und somit eine stabile Stützstellung sowohl auf den Boden, als auch in der Transportstellung auf dem Schieberahmen 8 gegeben ist. Erst bei einer Schrägstellung des Aufbaus, wie sie in Fig. 3 zu erkennen ist, gelangen die Gleitrollen in Kontakt mit dem Boden, so daß zum Zwecke des Aufnehmens und des vollständigen Absetzens des Aufbaus 15 der Aufbau auf dem Boden rollen kann. Bei Verwendung von Behältern ohne Gleitrollen hat sich als notwendig erwiesen, daß eine abklappbare keilförmig ausgebildete (weiter unten näher beschriebene) Auffahrrampe 44 am Schieberahmen Verwendung findet, welche das Auf- und Abschieben von Behältern bis zum Boden ermöglicht.

Die Funktionsweise der vorliegenden Erfindung soll nachstehend näher erläutert werden:

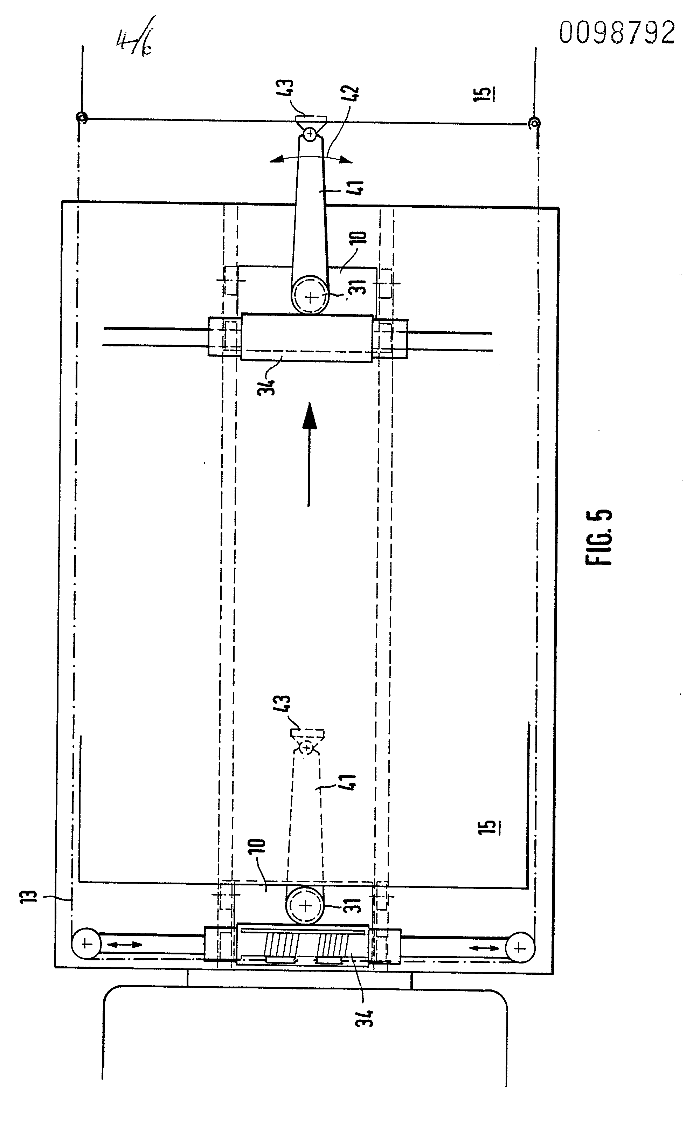

1. Aufnehmen und Absetzen des Behälters vom Boden (Fig. 3 und 4):

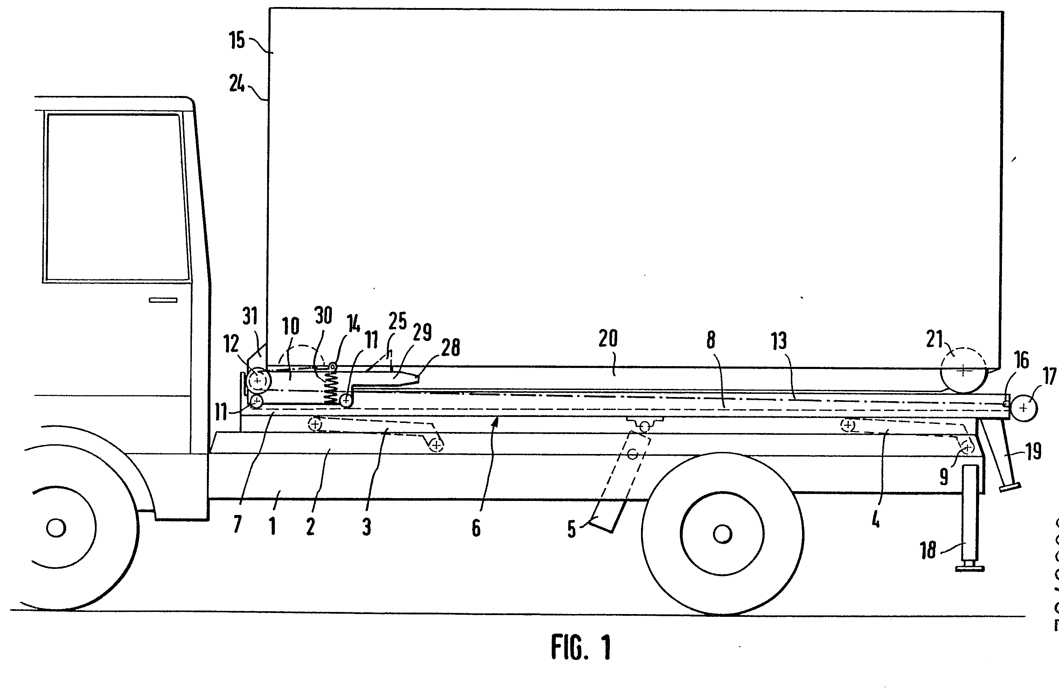

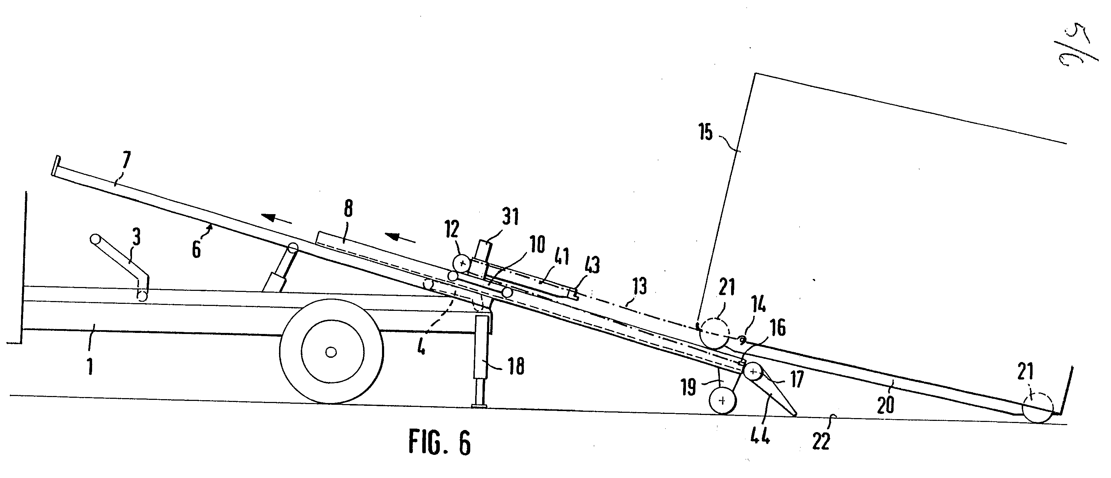

Das Fahrgestell 1 des Fahrzeugs wird zunächst über die hydraulische Abstützung 18 abgesichert. Anschließend wird der Hubrahmen 6 mit Hilfe des Hubzylinders 5 bei ausgehängten vorderen Hubrahmenstreben 3 und starr mit dem Trägerrahmen 7 verbundenen hinteren Hubrahmenstreben 4 in eine Schräglage bis etwa 15° versetzt. Anschließend wird der Schieberahmen 8 mit Hilfe einer nicht dargestellten Vorrichtung nach hinten ausgefahren, bis die Stützstrebe 19, bzw. Stützrolle den Boden berührt, oder bis die keilförmige Auffahrrampe 44 (Fig. 6) in abgeklappten Zustand Bodenkontakt hat. Der Schlitten 10, welcher über einen Motor (Hydraulikmotor) auf dem Schieberahmen 8 verschiebbar montiert ist, wird nach hinten über die Schräge bewegt und das über eine Umlenkrolle 12 am Schlitten geführte, am einen Ende bei 16 am Schieberahmen befestigte Zugseil 13 in eine Seilbefestigung 14 am Aufbau 15 eingehängt. Bei der Aufwärtsbewegung des Schlittens 10 in Richtung des Pfeiles 23 wird nunmehr der Aufbau 15 über die Schieberolle 17 hochgehoben bzw. über die abgeklappten Auffahrrampen 44 entlang des Schieberahmens 8 auf den Fahrzeugaufbau hinten aufgezogen, wobei evtl. vorhandene Gleitkufen 20 über den als Gleitrampe ausgebildeten Schieberahmen 8 bewegt werden. Die evtl. vorhandenen Gleitrollen sind dabei außer Funktion. Bei Vorhandensein der äußeren Gleitrollen dienen diese einem erleichtertem Abrollen auf den Boden 22, bis schließlich der Aufbau 15 vollständig auf den Rahmen gezogen ist. Nach dem Heraufziehen des Aufbaus 15 auf den Schieberahmen 8 wird dieser auf den Trägerrahmen 7 gezogen und anschliessend der Hubrahmen 6 in die in Fig. 1 gezeigte Transportstellung abgesenkt. Die vorgesehenen Arretierungsvorrichtungen zum Verriegeln der verschiedenen gegeneinander verschieblichen Teile während des Transports sind der Übersichtlichkeit halber in den Figuren nicht mit dargestellt, insbesondere nachdem derartige Verriegelungsteile in der Technik ja zur Verbindung solcher Teile hinlänglich bekannt sind.

Das Absetzen des Aufbaus 15 geschieht in umgekehrter Reihenfolge wie das Aufnehmen, d. h. zunächst wird die hydraulische Abstützung 18 ausgefahren und der Hubrahmen 6 angekippt. Der Aufbau 15 wird über den Schlitten 10 mit einem Schiebehaken 31, der an der Frontwand 24 des Aufbaus 15 angreift, über die schiefe Ebene des Schieberahmens 8 bewegt, bis die Gleitrolle 21 Bodenkontakt hat und ein Abrollen des Aufbaus 15 durch sein Eigengewicht erfolgt. Das Abgleiten des Aufbaus 15 in der letzten Phase wird vom Zugseil 13 übernommen, welches für ein sanftes Absetzen von der Schräge in die Waagrechte sorgt. Nach dem Aushängen des Zugseils 13 an der Seilbefestigung 14 und einem Einfahren der Absetzvorrichtung kann das Fahrzeug ohne Behälter bewegt werden.

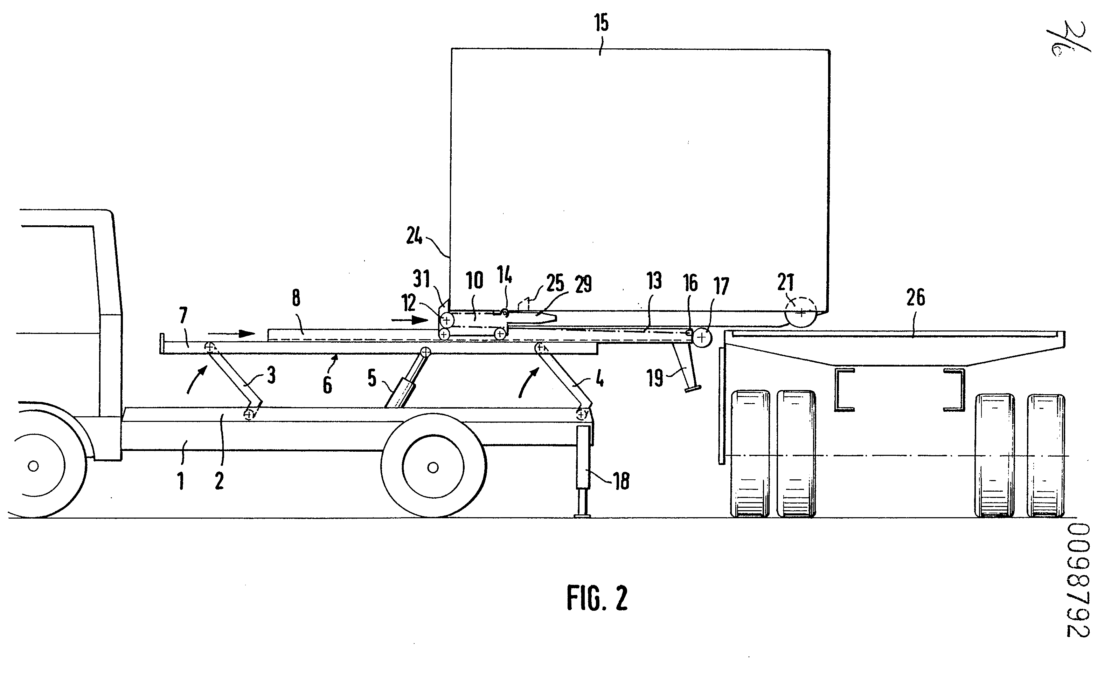

2. Aufnehmen und Überschieben von Behälter in waagrechter Anordnung (Fig. 2):

Das erfindungsgemäße Wechsel-Kippsystem mit einem speziellen Schieberahmen ermöglicht das Anheben des Hubrahmens 6 in jede beliebige Überladehöhe. Dadurch kann der Aufbau 15 auf eine Fahrzeugpritsche 26 eines anderen Fahrzeugs, in dem in Fig. 2 dargestellten Ausführungsbeispiel, quer zur Längsrichtung auf einen großen Fernlaster, sowie auch auf eine Laderampe oder einen Eisenbahnwaggon überschoben bzw. von dort übernommen werden. Das Überschieben des Aufbaus 15 erfolgt durch den Schlitten 10, wobei der Schiebehaken 31 an der Vorderkante 24 des Aufbaus angreift. Sobald der Aufbau 15 so weit verschoben ist, daß der Schlitten 10 seine Endstellung am Schieberahmen 8 erreicht hat, wird der Schlitten 10 unter dem Aufbau 15 herausgefahren bis der versenkbare Überschiebhaken 25 ausgefahren werden kann. Mit Hilfe dieses Überschiebhakens 25 kann dann der Rest der Schiebebewegung durch den Schlitten 10 ausgeführt werden, so daß der Aufbau 15 vollständig auf die Fahrzeugpritsche 26 eines anderen Fahrzeugs, bzw. eine Rampe oder einen Eisenbahnwaggon aufgeschoben wird. Der bei 12 schwenkbar am Schlitten angelenkte, am Ende eine Keilrampe 28 bildende Schlitten-Ausleger 29 ist durch eine Hubfeder 30 in waagrechter Lage fixiert, läßt jedoch eine gewisse Bewegung in senkrechter Richtung zu, so daß Höhendifferenzen zwischen Absetzfahrzeug und Überfahrplateau automatisch ausgeglichen werden.

Das Aufnehmen des Aufbaus 15 von einem Überfahrplateau (Fahrzeugpritsche 26 od. dergl.) geschieht mit umgekehrten Betriebsablauf mittels des eingehängten Zugseils 13.

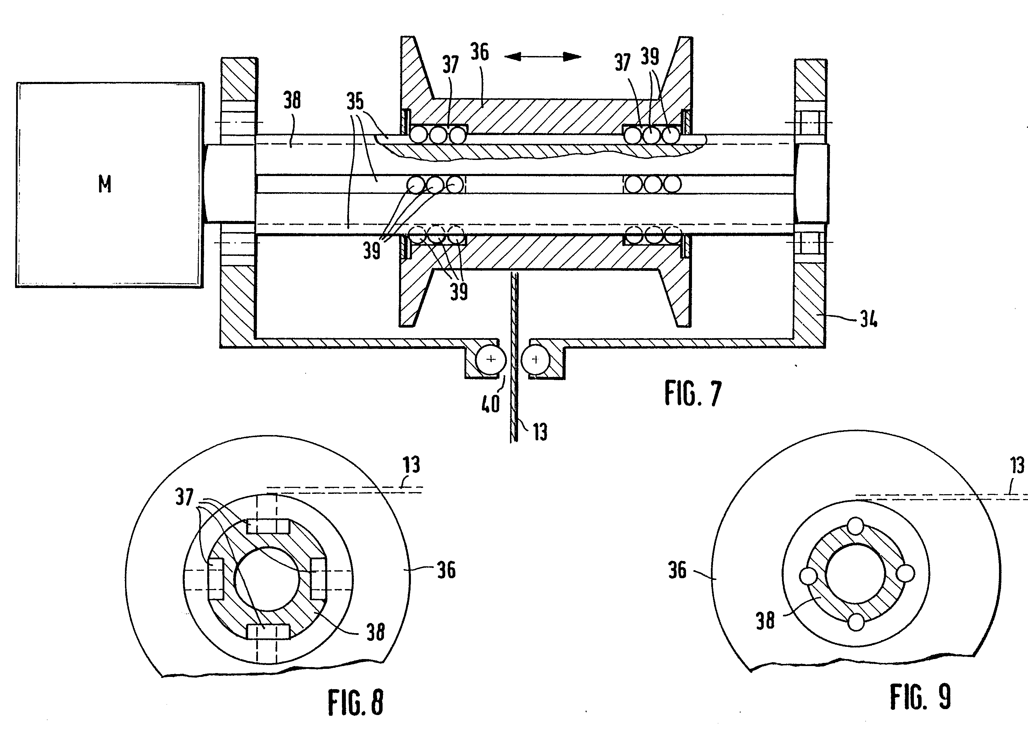

Die notwendige exakte Seilaufwicklung läßt sich am besten mit Hilfe einer neuartigen Seilwinde 34 erzielen, die in den Fig. 5 bis 8 näher dargestellt ist. Für den Schieberahmen wird dabei eine Seilwinde mit Doppeltrommel für zwei Seile benötigt, welche durch ein oder zwei Antriebsaggregate angetrieben sein können. Die Technik dieser Doppelseilwinde ist so ausgelegt, daß die beiden Seiltrommeln unabhängig voneinander unterschiedliche Geschwindigkeit fahren können, daß aber auch ein Synchronlauf durch mechanische Koppelung der beiden Windenelemente möglich ist. Zur Veranschaulichung ist in den Fig. 7 bis 9 eine der Seilwinden 34 beschrieben.

Die Seilwinde besteht aus einer über einen Motor M angetriebenen Antriebswelle, die mehrere, im dargestellten Ausführungsbeispiel vier, in axialer Richtung am Umfang verteilt angeordnete Nuten 35 enthält. Die Seiltrommel 36 enthält ebenfalls in ihrem Innendurchmesser endseitige Nutabschnitte 37. Die Nuten 35 der Antriebswelle 38 und die Nuten 37 der Seiltrommel 36 werden durch Paßfedern, Rollen, bzw. Rollenlager oder Kugeln 39 miteinander gekoppelt, so daß die Seiltrommel 36 zwar eine zwangsläufige Drehbewegung mit der Antriebswelle 38 ausführt, aber darüber hinaus axial auf dieser frei verschiebbar ist. Beim Auf- und Abspulen des Seils 13, welches durch eine Einführungsöffnung 40 (evtl. mit Seilführungsrollen) auf die Seiltrommel 36 geführt wird, wickelt sich das Seil 13 selbsttätig sauber auf, indem die Seiltrommel 36 über die beschriebene Nutenführung seitlich mitwandert. Bei mehrlagiger Seilaufwicklung bewegt sich die Seiltrommel 36 somit wechselweise nach beiden Seiten.

Die beschriebene Ausführung einer Seilwinde gewährleistet trotz starrer Seileinführungsöffnung eine einwandfreie Seilaufspulung durch die seitliche Bewegung der Trommel. Das Seil wird selbsttätig so geführt, als wäre eine übliche zwangsgesteuerte Seilaufspulung vorhanden.

Aus den Fig. 5 und 6 erkennt man darüber hinaus eine abgewandelte Ausbildung des Schlittens 10 mit einem Ausleger 41. Das Abschieben des Behälters 15 erfolgt über den Schlitten 10, wobei der Schiebehaken 31 an der Behälter-Vorderkante angreift. Sobald der Behälter 15 so weit verschoben ist, daß der Schlitten 10 seine Endstellung erreicht hat, wird der Schlitten 10 unter dem Behälter zurückgefahren und der Schlittenausleger 41 als Ganzes mittels Hydraulikzylinder nach oben bewegt. Das Ende des Schlittenauslegers 41 wird dann dazu verwendet, den Behälter endgültig so weit notwendig zu überschieben. Um eine seitliche Einjustierung des Behälters 15 zu ermöglichen, ist der Schlittenausleger 41 zusätzlich seitlich bis zu einem gewissen Winkel hydraulisch schwenkbar (Doppelpfeil 42 in Fig. 5). Dadurch ergibt sich die Möglichkeit, den Behälter 15 mit Hilfe des hydraulisch gesteuerten Schlittenauslegers 41 auch in seitlicher Richtung in die gewünschte Endlage zu bringen. Bei 43 ist dabei ein schwenkbar am Ausleger 41 angelenktes Kopfstück dargestellt, welches ein glattes Anliegen an der Vorderwand des Behälters 15 auch bei einer verschwenkten Anordnung des Auslegers 41 garantiert. Bei 44 erkennt man eine keilförmige Auffahrrampe, die insbesondere auch ein Aufnehmen von Kisten oder Containern ohne Rollen erleichtert.

0098792

- 1 -

<u>Patentansprüche</u>

1. Nutzfahrzeug mit einem zur Aufnahme eines wechselbaren Aufbaus (Behälter) dienenden Hubrahmen, der gegenüber dem Fahrzeugrahmen durch eine Hubvorrichtung anhebbar und kippbar angeordnet ist, <u>dadurch gekennzeichnet</u>, daß der durch vordere und hintere Hubrahmenstreben (3, 4) parallelogrammartig geführte Hubrahmen (6), wobei die hinteren Hubrahmenstreben (4) zum Kippen starr mit dem Hubrahmen (6) verbindbar sind, in seiner Transportstellung auf dem Fahrzeugrahmen (1, 2) aufliegt, und daß der Hubrahmen (6) einen gegenüber einem unteren Trägerrahmen (7) längsverschiebbaren Schieberahmen (8) aufweist.

2. Nutzfahrzeug nach Anspruch 1, <u>dadurch gekennzeichnet</u>, daß der Schieberahmen (8) als Gleitrampe ausgebildet ist.

3. Nutzfahrzeug nach Anspruch 1 oder 2, <u>gekennzeichnet durch</u> einen auf dem Schieberahmen (8) gleitend verschiebbaren Schlitten (10) zum Absetzen, Überschieben und Aufnehmen des Aufbaus (15).

4. Nutzfahrzeug nach Anspruch 3, <u>dadurch gekennzeichnet</u>, daß der Aufbau (15) mit Gleitkufen (20) und endseitigen, nur bei Schrägstellung des Aufbaus am Boden aufliegenden Gleitrollen (21) versehen ist.

5. Nutzfahrzeug nach einem der Ansprüche 2 bis 4, <u>dadurch gekennzeichnet</u>, daß der mit Stützstreben versehene Schieberahmen am Ende mit einer Schieberolle (17) zum Aufnehmen und Absenken des vorderen Endes des Aufbaus (15) mittels einer Seilwinde versehen ist.

6. Nutzfahrzeug nach Anspruch 5, dadurch gekennzeichnet, daß die Seilwinde durch den mit einer Antriebsvorrichtung versehenen Schlitten gebildet ist, der eine Umlenkrolle (12) für das am hinteren Ende des Schieberahmens (8) befestigte Zugseil (13) trägt.

7. Nutzfahrzeug nach einem der Ansprüche 3 bis 6, dadurch gekennzeichnet, daß der Schlitten (10) mit wenigstens einem an der Vorderwand (24) des Aufbaus angreifenden Schiebehaken (31) versehen ist.

8. Nutzfahrzeug nach Anspruch 7, gekennzeichnet durch einen in Abstand vom Schiebehaken (31) im Bereich eines Schlitten-Auslegers (29) angeordneten versenkbaren Überschiebhaken (25).

9. Nutzfahrzeug nach Anspruch 8, dadurch gekennzeichnet, daß der am Ende eine Keilrampe bildende Schlitten-Ausleger (29) am vorderen Ende am Schlitten angelenkt und durch eine Federeinrichtung horizontal verschwenkbar abgestützt ist.

10. Nutzfahrzeug nach Anspruch 8 oder 9, dadurch gekennzeichnet, daß der Schlitten (10) mit einem hydraulisch nach oben herausschiebbaren Schlittenausleger (41) versehen ist.

11. Nutzfahrzeug nach Anspruch 10, dadurch gekennzeichnet, daß der Schlittenausleger (41) hydraulisch nach beiden Seiten verschwenkbar ist.

12. Nutzfahrzeug nach Anspruch 10 oder 11, dadurch gekennzeichnet, daß der Schlittenausleger (41) mit einem schwenkbaren Kopfstück (43) versehen ist.

0098792

- 3 -

13. Nutzfahrzeug nach einem der Ansprüche 3 bis 12, dadurch gekennzeichnet, daß der Schlitten (10) mit einem integrierten Hydraulikmotor versehen ist, der über einen Seil- oder Kettenantrieb, oder über Zahnräder an Zahnstangen am Schieberahmen angreift oder umgekehrt.

14. Nutzfahrzeug nach einem der Ansprüche 3 bis 13, dadurch gekennzeichnet, daß der Schlitten (10) in Laufschienen mittig am Schieberahmen geführt ist.

15. Nutzfahrzeug nach einem der Ansprüche 1 bis 14, dadurch gekennzeichnet, daß die Länge des Aufbaus (15) der Aufbaubreite und die Breite des Aufbaus (15) im wesentlichen einem ganzzahligen Bruchteil der Ladelänge von Eisenbahnwaggons bzw. Container-Lastkraftwagen entspricht.

16. Seilwinde, insbesondere für ein Nutzfahrzeug nach einem der Ansprüche 1 bis 15, dadurch gekennzeichnet, daß die Seiltrommel (36) drehfest und axial verschiebbar mit der Antriebswelle (38) des Seilwindenmotors (M) verbunden ist.

17. Seilwinde nach Anspruch 16, dadurch gekennzeichnet, daß die Seiltrommel (36) und die Antriebswelle (38) mit zur Aufnahme von Paßfedern, Rollen, Rollenlagern oder Kugeln (30) dienenden Nuten (37) bzw. (35) versehen sind.

FIG. 1

FIG. 2

0098792

FIG. 3

FIG. 4

4/6

0098792

FIG. 5

FIG. 6

FIG. 7

FIG. 8

FIG. 9

0098792

0098792

Europäisches
Patentamt

**EUROPÄISCHER RECHERCHENBERICHT**

Nummer der Anmeldung

EP 83 71 0045

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,X | DE-U-8 218 832 (PAUL) * Ansprüche 1-12; Figuren 1-4 * | 1-9,13 -15 | B 60 P 1/64 |
| Y | EP-A-0 045 398 (PAUL) * Ansprüche 1, 2; Figuren 1, 3, 4 * | 1 | |
| Y,A | DE-A-2 818 293 (CONSTRUCTIONS NAVALES ET INDUSTRIELLES DE LA MEDITERRANEE) * Figur 1 * | 1-3 | |
| A | DE-A-2 823 947 (MULTILIFT OY) * Figuren 1-10 * | 1-3,5, 14 | |
| A | US-A-4 114 768 (ROBERTSON) * Figuren 2, 3, 7-9 * | 3,7 | |
| A | US-A-3 964 626 (ARREGUI) * Figuren 1-4 * | 1,4 | RECHERCHIERTE SACHGEBIETE (Int. Cl. ³) B 60 P 1/00 |
| A | US-A-3 819 077 (RASMUSSEN et al.) * Figuren 1-4 * | 13 | |
| A | DE-A-2 443 757 (MASCHINENFABRIKEN B. KRONE) * Ansprüche 2, 3; Figur 2 * | 16 | |

----

Der vorliegende Recherchenbericht wurde für alle Patentansprüche erstellt.

| Recherchenort BERLIN | Abschlußdatum der Recherche 30-08-1983 | Prüfer LUDWIG H J |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82